# EUROPÄISCHE PATENTSCHRIFT

(11) **EP 3 781 733 B1**
(45) Veröffentlichungstag und Bekanntmachung des Hinweises auf die Patenterteilung: **13.05.2026**
(21) Anmeldenummer: 19715060.0
(22) Anmeldetag: 29.03.2019
(51) Int. Cl.: D01G 13/00, D01G 23/04, G01G 13/18, G01G 17/02

(54) **VERFAHREN ZUM BETREIBEN EINER SPEISEANLAGE UND DAMIT BETRIEBENE SPEISEANLAGE**
METHOD FOR OPERATING A FEED INSTALLATION, AND FEED INSTALLATION OPERATED USING SAID METHOD
PROCÉDÉ DE FONCTIONNEMENT D'UN SYSTÈME D'ALIMENTATION ET SYSTÈME D'ALIMENTATION ASSOCIÉ

(30) Priorität: 16.04.2018 DE 102018109005
(43) Veröffentlichungstag der Anmeldung: 24.02.2021
(73) Patentinhaber: Trützschler Group SE, 41199 Mönchengladbach (DE)
(72) Erfinder: WACKERZAPP, Frank, 41363 Jüchen (DE); TAMMEN, Eike, 41199 Mönchengladbach (DE); MARX, Maximilian, 41066 Mönchengladbach (DE)
(86) Internationale Anmeldenummer: PCT/EP2019/058018
(87) Internationale Veröffentlichungsnummer: WO 2019/201575

(56) Entgegenhaltungen:
- DE-A1- 19 856 447
- US-A- 2 983 325
- US-A- 2 995 783
- US-A- 4 724 980

## Beschreibung

Die Erfindung betrifft ein Verfahren zum Betreiben einer Speiseanlage sowie eine mittels solch eines Verfahrens betriebene Speiseanlage.

Eine Spinnereianlage umfasst eine Vielzahl an einzelnen Spinnereimaschinen, die in einer Produktionskette hintereinander angeordnet sind. Eine oder mehrere Spinnereimaschine/n liefert/n das Material für eine oder mehrere nachgeschaltete Spinnereimaschine/n. Beispielsweise liefert ein Ballenöffner Fasermaterial an einen Reiniger beispielsweise in Form eines Fremdteilausscheiders. Der Fremdteilausscheider liefert die (vor-)gereinigten Fasern an einen Mischer. Der Mischer liefert die gemischten Fasern an einen Feinreiniger. Der Feinreiniger liefert die feingereinigten Fasern an mehrere Karden. Die Karden liefern Faserbänder an in der Anzahl vergleichsweise weniger Strecken. Die Strecken liefern verstreckte Faserbänder beispielhaft an in der Anzahl vergleichsweise wiederum weniger Bandwickler. Die Bandwickler liefern Wickel an in der Anzahl vergleichsweise mehr Kämmmaschinen. Die Kämmmaschinen liefern gekämmtes und verstrecktes Faserband an in der Anzahl vergleichsweise weniger Strecken. Diese Strecken wiederum liefern verstrecktes Faserband beispielsweise an einen Flyer. Der Flyer wiederum liefert Vorgarn an eine Spinnmaschine. Das Hauptproblem besteht darin, den einzelnen Spinnereimaschinen genügend Material zum Verarbeiten zur Verfügung zu stellen, damit die gesamte Anlage möglichst unterbrechungsfrei und effizient arbeiten kann.

Die US 2 983 325 A offenbart ein Verfahren, bei dem in periodischen Intervallen in einem zyklischen Betrieb eine Zuführeinrichtung gemessene Mengen an faserigem Material auf einem Zuführförderer abwirft. Ein Mechanismus beschleunigt automatisch, wenn die Wiegebox zu langsam gefüllt wird.

Ein Zeitverzögerungsmechanismus ist vorgesehen, der ein Nadelband durch einen variablen Motorantrieb automatisch beschleunigt, wenn das Band die Wiegebox nicht innerhalb einer vorbestimmten Zeitspanne mit der gewünschten Fasermenge versorgt hat. Der Timer wird automatisch gestartet, wenn ein Wiegebox-Füllzyklus beginnt. Sobald die Wiegebox gefüllt ist, wird der Timer gestoppt. Wenn sich die Wiegebox in einem ausgewählten Zeitraum nicht füllt, wird der Motorantrieb hochgefahren, um das Nadelband zu beschleunigen und somit ein ordnungsgemäßes Füllen der Wiegebox sicherzustellen, bevor die periodische Entleerung auftritt.

Aus der US 2 995 783 A ist eine weitere Maschine bekannt, die kurz vor Ende eines vorbestimmten Zeitintervalls in einen Hochgeschwindigkeitsbetrieb schaltet, um die Wiegepfanne mit einer vorbestimmten Menge an Fasermaterial zu befüllen.

Aus der DE 10 3005 040 399 A1 ist ein Flockenbeschickungssystem bekannt, bei dem ein Spinnereimeister die Produktion eingeben kann. Nachteilig ist, dass es dazu kommen kann, dass das Flockenbeschickungssystem nicht in der Lage ist, das Mischband bei kontinuierlichem Bewegen rechtzeitig zu beschicken. Dies ist insbesondere dem Umstand geschuldet, dass der zur jeweiligen Speisemaschine geführte Luft-Faser-Strom nicht so kontinuierlich ist, also immer die gewünschte Anzahl an Flocken pro Zeiteinheit anliefert, wie es wünschenswert wäre. In diesem Fall muss das Mischband angehalten werden, bis alle Speisemaschinen des Flockenbeschickungssystems gefüllt sind. Zudem erfolgt die 1tellung der Produktion an der jeweiligen Speisemaschine manuell, sodass ein Abgleich mit dem Mischband überhaupt nicht stattfindet. Dies führt zu einem ungewollten Stop-And-Go-Betrieb des Mischbands, verbunden mit höherer Energieaufnahme des gesamten Systems aufgrund des häufigen Beschleunigens und Anhaltens des Mischbands und damit höheren Kosten. Zudem verringert sich die Produktionsrate der gesamten Anlage, was zu Zeitverlusten in der Produktion führt. Nicht zuletzt belastet dies die Mechanik der Mischbandeinrichtung.

Aufgabe der Erfindung ist es, den vorgenannten Nachteilen zu begegnen.

Diese Aufgabe wird durch den Gegenstand der Ansprüche 1 und 7 gelöst.

Vorteilhafte Weiterbildungen sind in den Unteransprüchen angegeben.

Erfindungsgemäß ist ein Verfahren zum Betreiben einer Speiseanlage vorgesehen. Die Speiseanlage ist mit einer zu speisenden Annahmevorrichtung und zumindest einer Speisevorrichtung ausgestattet. Die Speisevorrichtung ist in bekannter Weise gestaltet, zyklusartig Fasermaterial einer vorbestimmten Menge abzuwiegen und nach dem Abwiegen an die Annahmevorrichtung abzuliefern. Das Verfahren sieht einen Zyklus vor. Während jedes Zyklus wird in einem ersten Schritt die zur jeweiligen Speisevorrichtung zugehörige Fasermaterialmenge in der jeweiligen Speisevorrichtung abgewogen. Ist eine Zeitspanne abgelaufen, umfasst der Zyklus einen zweiten Schritt des Prüfens, ob jede jeweilige Speisevorrichtung in der Lage ist, die zugehörige Fasermaterialmenge abgewogen und an die Annahmevorrichtung abgeliefert zu haben, wenn die aktuelle Zykluszeit abgelaufen ist. Bei mehreren Speisevorrichtungen können sich deren Abwurfzeiten beispielsweise aufgrund unterschiedlich großer, abzuwiegender Fasermaterialmengen voneinander unterscheiden, sodass der Prüfschritt auf die "langsamste" Speisevorrichtung Rücksicht nimmt. Andernfalls könnte der gesamte Prozess ins Stocken geraten, was zum vorgenannten Stop-And-Go-Betrieb führen könnte. Ergibt die Prüfung, dass jede Speisevorrichtung in der Lage ist, die zugehörige Fasermaterialmenge entsprechend abgewogen und abgeliefert zu haben, umfasst der Zyklus einen dritten Schritt des Ablieferns der zugehörigen Fasermaterialmenge von der jeweiligen Speisevorrichtung an die Annahmevorrichtung. Ergibt die Prüfung hingegen, dass wenigstens eine Speisevorrichtung nicht in der Lage ist, die zugehörige Fasermaterialmenge entsprechend abgewogen und abgeliefert zu haben, umfasst der Zyklus einen vierten Schritt des Erhöhens einer Arbeitsgeschwindigkeit dieser wenigstens einen Speisevorrichtung um ein vorbestimmtes Maß. Dies hat den Vorteil, dass nur die Speisevorrichtung/en von einer Betriebsänderung betroffen sind, die die aktuell geforderten Bedingungen hinsichtlich der Geschwindigkeit beim Abwiegen und Abliefern der zugehörigen Fasermaterialmenge momentan nicht erfüllen. Und da sich das Verfahren auf die Speisevorrichtung/en auswirkt, die die momentanen Anforderungen nicht erfüllen, muss die Annahmevorrichtung nicht angehalten werden.

Das Abwiegen der Speisevorrichtung/en beinhaltet eine Schnellfüllphase und eine Langsamfüllphase. In der Schnellfüllphase wird Fasermaterial in einen Aufnahmebehälter der jeweiligen Speisevorrichtung mit einer ersten Füllgeschwindigkeit transportiert. Zeitgleich wird dieses aufgenommene Fasermaterial gewogen. Ist eine vorbestimmte Vorfüllfasermaterialmenge im Aufnahmebehälter aufgenommen, die geringer ist als die vorbestimmte Fasermaterialmenge, schließt sich die Langsamfüllphase an. Diese Phase umfasst ein weitergehendes Transportieren des Fasermaterials in den Aufnahmebehälter mit einer zur ersten Füllgeschwindigkeit geringeren, zweiten Füllgeschwindigkeit. Ist die die zugehörige Fasermaterialmenge erreicht, wird der der Aufnahmebehälter beruhigt. Dies ist bekanntermaßen notwendig, damit sich das Fasermaterial im Aufnahmebehälter sammeln kann, damit es vollständig abgeliefert werden kann. Die Schnellfüllphase dient dem schnellen Erreichen der vorbestimmten Vorfüllfasermaterialmenge, und das Abwiegen muss nicht so präzise sein. Die Präzision des Abwiegens erfolgt in der Langsamfüllphase. Damit ist ein sicheres Abwiegen ermöglicht.

Das Erhöhen der Arbeitsgeschwindigkeit umfasst vorzugsweise ein Verkürzen der Zeit zum Abwiegen bei der jeweiligen Speisevorrichtung. Dadurch werden andere Teilprozesse des Abwiegens wie das Beruhigen, das praktisch zeitlich nicht verkürzt werden kann, ohne Einbußen im Prozess hinzunehmen, nicht beeinträchtigt.

Vorzugsweise umfasst der zweite Schritt ein Prüfen, ob jede der zumindest einen Speisevorrichtung die zugehörige Fasermaterialmenge bereits abgewogen hat. Dies hat den Vorteil, dass bei höheren Anforderungen hinsichtlich der Arbeitsgeschwindigkeit "Luft nach oben" ist. Zudem ist dadurch sichergestellt, dass die Ablieferung des abgewogenen Fasermaterials auf jeden Fall zeitgerecht erfolgen kann.

Dabei kann der Zyklus einen fünften Schritt aufweisen. Der fünfte Schritt wird erfindungsgemäß ausgeführt, wenn die aktuelle Zykluszeit größer als die vorbestimmte Zykluszeit ist und im zweiten Schritt ermittelt worden ist, dass jede der zumindest einen Speisevorrichtung die zugehörige Fasermaterialmenge bereits abgewogen hat. Der fünfte Schritt umfasst dabei ein Verkürzen der aktuellen Zykluszeit der Annahmevorrichtung um ein vorbestimmtes Maß. Dieses Maß ist kleiner oder gleich einem Minimum der Abwurfzeiten aller der zumindest einen Speisevorrichtung ist und dergestalt, dass die neue Zykluszeit größer oder gleich der vorbestimmten Zykluszeit ist. Der fünfte Schritt hat den Vorteil, die Speisevorrichtung/en und die Annahmevorrichtung im Prozess, wenn nötig, abzubremsen und wieder beschleunigen zu können, wenn die das Abbremsen hervorrufenden Ursachen nicht mehr bestehen. Solch eine Ursache kann beispielsweise sein, wenn eine Speisevorrichtung zu wenig Fasermaterial pro Zeiteinheit zum Abwiegen erhält. In dem Fall müsste die Arbeitsgeschwindigkeit sowohl dieser Speisevorrichtung als auch zumindest der Annahmevorrichtung herabgesetzt werden. Steigt die Menge des abzuwiegenden Fasermaterials wieder an, kann die Arbeitsgeschwindigkeit wieder erhöht werden.

Bei jedem der vorgenannten Verfahren kann der zweite Schritt ein Prüfen umfassen, ob das Abwiegen jeder der zumindest einen Speisevorrichtung so weit fortgeschritten ist, dass nach Ablauf der aktuellen Zykluszeit im jeweiligen Zyklus die jeweilige Speisevorrichtung das Abwiegen und Abliefern abgeschlossen haben wird. Dieser Prüfschritt hat den Hintergrund, dass ein temporäres Abbremsen und Wiederbeschleunigen der Annahmevorrichtung ausreichen kann, das Abwiegen und Abliefern des Fasermaterials in zeitlicher Hinsicht zu bewerkstelligen. D. h. die Annahmevorrichtung muss nicht angehalten werden. Somit wird auch in solch einem Betriebszustand ein Stop-And-Go-Betrieb weitestgehend vermieden.

Vorzugsweise gibt es zwischen diesen zwei Phasen, nämlich der Schnellfüllphase und der Langsamphase, noch eine Bremsphase. In dieser Phase wird die Geschwindigkeit, mit der der Aufnahmebehälter befüllt wird, von der ersten auf die zweite Füllgeschwindigkeit gemäß einem vorbestimmten Verlauf abgesenkt. Der Verlauf ergibt sich beispielsweise aus dem Wunsch, die mechanischen Belastungen während der Geschwindigkeitsverringerung insbesondere am Aufnahmebehälter so gering wie möglich zu halten. Solche Belastungen beinhalten beispielsweise Vibrationen des Aufnahmebehälters, die zu einem ungezielten Faserflug des darin aufgenommenen Fasermaterials führen können.

Das vorgenannte Verkürzen der Zeit zum Abwiegen kann dabei mittels Variierens der zeitlichen Dauer zumindest einer der vorgenannten Phasen des Abwiegens, vorzugsweise der Schnell- und der Langsamfüllphase, erfolgen. Beim Vorliegen der Bremsphase bleibt diese wegen der besagten mechanischen Belastungen vorzugsweise von der zeitlichen Verkürzung unbehelligt.

Jedes der genannten Verfahren kann einen sechsten Schritt aufweisen. Der sechste Schritt wird ausgeführt, wenn der zweite Schritt ergibt, dass wenigstens eine nicht in der Lage ist, die zugehörige Fasermaterialmenge entsprechend abgewogen und abgeliefert zu haben, und diese Speisevorrichtung bereits mit maximaler Arbeitsgeschwindigkeit arbeitet. Der sechste Schritt umfasst ein Signalisieren dieses Zustands der betreffenden Speisevorrichtung/en nach außen. Alternativ oder zusätzlich umfasst der sechste Schritt einen ersten Teilprozess. Dieser Teilprozess umfasst ein Übermitteln einer notwendigen Restzeit zum Beenden des Abwiegens für die betreffende/n Speisevorrichtung/en an eine die Annahmevorrichtung steuernde Einrichtung. Daraufhin wird die aktuelle Zykluszeit in der Annahmevorrichtung auf Basis eines Maximums der übermittelten, wenigstens einen Restzeit geändert. Dies führt dazu, dass die Arbeitsgeschwindigkeit der Annahmevorrichtung auf ein Maß gesenkt wird, bei dem jede Speisevorrichtung in der Lage sein sollte, das jeweils zugehörige Fasermaterial abzuwiegen und an die Annahmevorrichtung abzuliefern. Damit muss der Betrieb der Anlage nicht angehalten werden, er wird nur (temporär) verlangsamt. Auch dies hilft, den ungewollten Stop-And-Go-Betrieb zu vermeiden.

Vorzugsweise wird jeder der vorgenannten Zyklen kontinuierlich wiederholt. Damit ergibt sich ein kontinuierlicher Fasermaterial-Verarbeitungsprozess.

Jedes der vorgenannten Verfahren kann zum Betreiben einer Flockenmischanlage dienen. Solche Anlagen dienen bekanntermaßen dem Zweck, Fasermaterial mittels Speisevorrichtungen oder -maschinen nacheinander auf einem vorzugsweise mittels eines Transportbands gebildeten Transportabschnitts schichtenartig übereinander zu legen und nachfolgende Maschinen damit zu beschicken. Dabei umfasst die Annahmevorrichtung einen Transportabschnitt. Der Transportabschnitt ist eingerichtet, aufgenommenes Fasermaterial in eine vorbestimmte Bewegungsrichtung zu bewegen. Die zumindest eine Speisevorrichtung ist gestaltet, Fasermaterial einer vorbestimmten Menge (= zugehörige Fasermaterialmenge) abzuwiegen und nach dem Abwiegen auf den Transportabschnitt abzuwerfen bzw. darauf abzulegen. Der Zyklus umfasst dabei einen siebten Schritt des Bewegens des Transportabschnitts in die Bewegungsrichtung mit einer vorbestimmten Bewegungsgeschwindigkeit aus einer Startposition hinsichtlich des Zyklus heraus. Die Bewegungsgeschwindigkeit berechnet sich im Wesentlichen aus einem vorbestimmten Zyklus-Verfahrweg und der aktuellen Zykluszeit. Der Zyklus-Verfahrweg entspricht dabei einer Summe aus dem vorbestimmten Verfahrweg und einem vorbestimmten Abwurfweg. Der Abwurfweg stellt die Wegstrecke dar, die der Transportabschnitt während des Abwurf- bzw. Ablegevorgangs der jeweiligen Speisevorrichtung zurücklegt. Er entspricht also einem maximalen Bewegungsweg, den der Transportabschnitt während eines Abwurfs der jeweils in Bewegungsrichtung des Transportabschnitts angeordneten Speisevorrichtung/en zurücklegt. Der zweite Schritt des jeweiligen Zyklus wird ausgeführt, wenn der Transportabschnitt den vorbestimmten Verfahrweg zurückgelegt hat. Ergibt der zweite Schritt, dass jede Speisevorrichtung in der Lage ist, die zugehörige Fasermaterialmenge entsprechend abgewogen zu haben, umfasst der Zyklus einen achten Schritt des Weiterbewegens des Transportabschnitts mit der vorbestimmten Bewegungsgeschwindigkeit. Der dritte Schritt umfasst ein Abwerfen bzw. Ablegen der zugehörigen Fasermaterialmenge, wenn der Transportabschnitt den vorbestimmten Verfahrweg zurückgelegt hat. Ergibt der zweite Schritt, dass wenigstens eine Speisevorrichtung nicht in der Lage ist, die zugehörige Fasermaterialmenge entsprechend abgewogen zu haben, wird ein zweiter Teilprozess gestartet. Dieser Teilprozess umfasst einen ersten Teilschritt des Abbremsens des Transportabschnitts auf eine geringere Bewegungsgeschwindigkeit. Daraufhin wird in einem zweiten Teilschritt abgewartet, bis jede Speisevorrichtung in der Lage ist, die zugehörige Fasermaterialmenge abgewogen und abgeliefert zu haben, nachdem den Transportabschnitt wieder auf die vorbestimmte Bewegungsgeschwindigkeit beschleunigt worden ist. Daraufhin wird der Transportabschnitt in einem dritten Teilschritt in Bewegungsrichtung auf die vorbestimmte Bewegungsgeschwindigkeit beschleunigt. Zudem umfasst dieser Teilprozess einen vierten Teilschritt des Abwerfens bzw. Ablegens der zugehörigen Fasermaterialmenge, wenn der Transportabschnitt die vorbestimmte Bewegungsgeschwindigkeit erreicht hat und/oder eine vorbestimmte Abwurfposition erreicht hat. Im zweiten Fall kann dabei die Bewegungsgeschwindigkeit noch nicht den endgültigen Wert erreicht haben. Dies verhindert wiederum in großem Maße das Auftreten des Stop-And-Go-Betriebs.

Dabei kann der dritte Schritt und/oder der zweite Teilschritt ein Abwerfen bzw. Ablegen der Fasermaterialmenge mittels jeder Speisevorrichtung beinhaltet bzw. beinhalten. D. h. alle Speisevorrichtungen liefern zu ein und demselben Zeitpunkt ihre Fasermaterialmenge ab. Dies ermöglicht, die Arbeitsgeschwindigkeit der Annahmevorrichtung anzupassen, ohne dass eine Speisevorrichtung zeitlich anders angesteuert werden muss als die andere/n Speisevorrichtung/en.

Bei einer kontinuierlichen Wiederholung des Zyklus stellt die Position des Transportabschnitts am Ende des einen Zyklus zugleich die Startposition des Transportabschnitts im unmittelbar darauffolgenden Zyklus dar. Dies ermöglicht einen pausenlosen Übergang zwischen den einzelnen Zyklen und damit einen kontinuierlichen Produktionsprozess, ggf. mit veränderten Betriebsparametern.

Nach Zurücklegen des Abwurfwegs kann das Verfahren einen achten Schritt vorsehen. Der achte Schritt umfasst ein Prüfen, ob jede Speisevorrichtung die zugehörige Fasermaterialmenge abgewogen hat. Ergibt das Prüfen, dass wenigstens eine Speisevorrichtung ihr Abwiegen noch nicht beendet hat, wird der zweite Teilprozess gestartet. Dies stellt sicher, dass sich die gesamte Anlage anpassen kann, um ein Anhalten zu vermeiden.

Wird im zweiten geprüft, ob jede Speisevorrichtung die zugehörige Fasermaterialmenge bereits abgewogen hat, kann das Verfahren zum Betreiben der Flockenmischanlage ein Verringern der Arbeitsgeschwindigkeit der jeweiligen Speisvorrichtung um ein vorbestimmtes Maß beinhalten. D. h. insbesondere bei zu langsam laufender Annahmevorrichtung, bei der die aktuelle Zykluszeit also länger als die vorbestimmte Zykluszeit ist, kann diese in der Abarbeitung (wieder) beschleunigt werden. Damit kann die Anlage beispielsweise aus einer temporären Phase einer relativ langsamen Produktion wieder hochgefahren werden.

Erfindungsgemäß ist ferner eine Speiseanlage vorgesehen. Diese Anlage ist aufgebaut und gestaltet, gemäß einem der vorgenannten Verfahren betrieben zu werden.

Vorzugsweise stellt diese Anlage die vorgenannte Flockenmischanlage dar. Dabei weist zumindest eine Speisevorrichtung einen Waagebehälter auf, der eine an einer dem Transportabschnitt abgewandten Seite ausgebildeten Einfüllsperre aufweist. Die Einfüllsperre ist bekanntermaßen gestaltet, in einem Aktivierungszustand eine Einfüllöffnung des Waagebehälters zu verschließen, sodass Fasermaterial daran gehindert ist, in den Waagebehälter zu gelangen. Dieser Zustand tritt auf, wenn das Abwiegen (ohne Beruhigen) abgeschlossen ist. In einem Deaktivierungszustand hingegen ist die Einfüllsperre gestaltet, die Einfüllöffnung (wieder) zu öffnen. Zudem weist der Waagebehälter einen an einer dem Transportabschnitt zugewandten Seite ausgebildeten Abwurfabschnitt auf. Der Abwurfabschnitt ist gestaltet, in einem Deaktivierungszustand eine Abwurföffnung des Waagebehälters zu verschließen, sodass im Waagebehälter befindliches Fasermaterial daran hindert ist, aus dem Waagebehälter herauszufallen. In einem Aktivierungszustand hingegen ist die Abwurföffnung des Waagebehälters geöffnet und so in einem Abstand zum Transportabschnitt angeordnet, dass sich im Waagebehälter befindliches Fasermaterial bei geöffneter Abwurföffnung auf den Transportabschnitt fällt. Ferner umfasst die Speisevorrichtung eine Wägeeinrichtung. Die Wägeeinrichtung ist gestaltet, das aktuelle Gewicht vom im Waagebehälter aufgenommenen Fasermaterial zu ermitteln. Die Anlage ist nicht nur eingerichtet, die Zeit für einen Zyklus zu ermitteln, sondern auch auf Basis der ermittelten Zykluszeit sowie der aktuellen Bewegungsgeschwindigkeit des Transportabschnitts und/oder dem aktuellen Bremsweg des Transportabschnitts zu ermitteln, ob die Speisevorrichtung/en in der Lage ist bzw. sind, die zugehörige Fasermaterialmenge abgewogen zu haben, wenn der Transportabschnitt den vorbestimmten Abwurfweg zurückgelegt hat. Damit ist sichergestellt, dass die Anlage in der Lage ist, zumindest bei temporär abgebremstem, also sich langsamer bewegendem Transportabschnitt, das Fasermaterial rechtzeitig zur Verfügung zu stellen. Dies kommt der Betriebssicherheit zugute.

Vorzugsweise weist solch eine Anlage mehrere Speisevorrichtungen auf, die in Bewegungsrichtung des Transportabschnitts hintereinander angeordnet sind. Dabei haben jeweils zwei unmittelbar benachbarte Speisevorrichtungen zueinander einen Mindestabstand zueinander, der einem Bewegungsweg entspricht, den der Transportabschnitt während eines Abwurfs der jeweils in Bewegungsrichtung des Transportabschnitts angeordneten, zumindest einen Speisevorrichtung zurücklegt. Dadurch ist gewährleistet, dass das Fasermaterial auf der Stelle des Transportabschnitts zu liegen kommt, wo es geplant ist.

Die Speisevorrichtung kann ausgewählt oder eine Kombination sein aus Faseröffner, Reiniger und/oder Mischreiniger.

Weitere Merkmale und Vorteile der Erfindung ergeben sich aus der nachfolgenden Beschreibung bevorzugter Ausführungsformen. Es zeigen:
- Figur 1: einen Teil einer Spinnereianlage in zwei Ansichten,
- Figur 2: ein Verfahren zum Betreiben der Spinnereianlage von Figur 1, gemäß einer Ausführungsform der Erfindung,
- Figur 3: den Abwiegeprozess von Figur 2 in größerem Detail,
- Figur 4: den Abbremsprozess von Figur 2 in größerem Detail,
- Figur 5: den Abwurfprozess von Figur 2 in größerem Detail und
- Figur 6: den Beschleunigungsprozess von Figur 2 in größerem Detail.

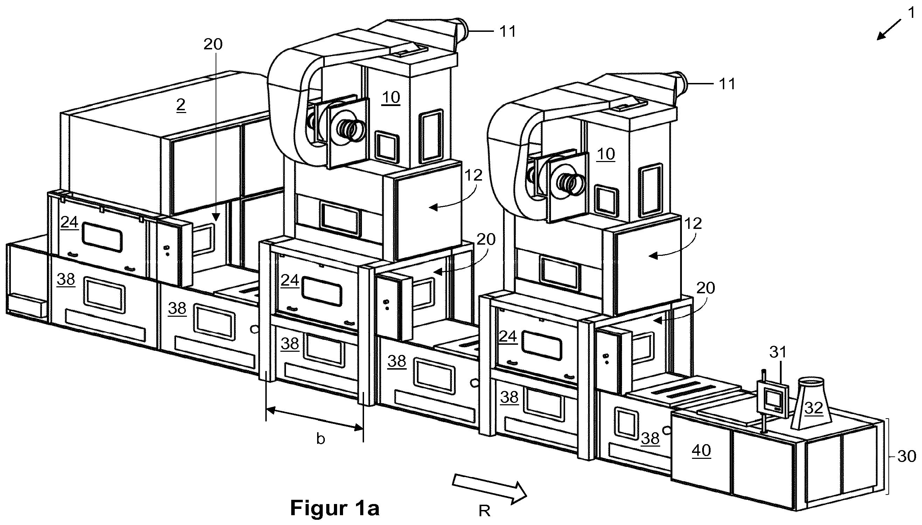

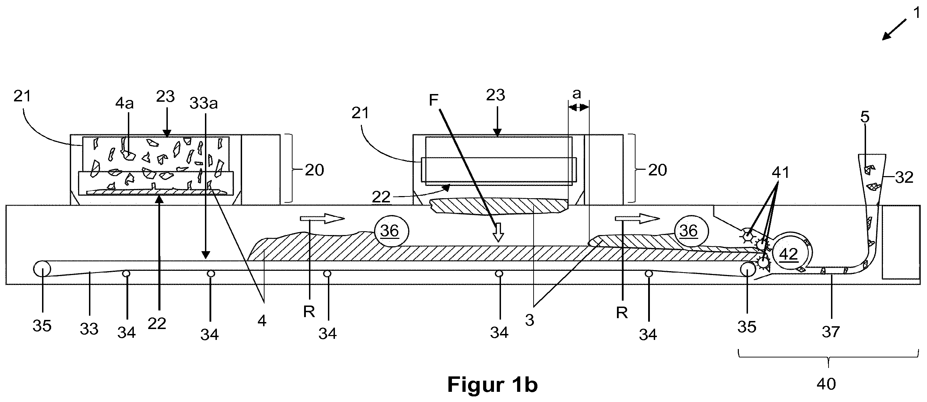

Figur 1 zeigt eine Flockenmischanlage 1 als Beispiel bzw. Bestandteil einer Spinnereianlage.

Die Flockenmischanlage 1 umfasst gemäß der perspektivischen Ansicht in Figur 1a im gezeigten Beispiel zwei Speiser 10. Jeder Speiser 10 weist einen Einlass 11 für einen ankommenden Faser-Luft-Strom auf. Dieser Strom wird in bekannter Weise in einem jeweils zugehörigen Abschnitt 12 geöffnet. Die dadurch geöffneten Faserflocken werden einem jeweils zugehörigen Wiegeabschnitt 20 zugeführt. Der Wiegeabschnitt 20 befindet sich hinter einer hier jeweils vorderen Abdeckung 24.

Links neben den Speisern 10 ist ein zusätzlicher Kastenspeiser 2 angeordnet, der ankommendes Fasermaterial ebenfalls öffnet und einem zugehörigen Wiegeabschnitt 20 zuführt.

Unterhalb der hier drei Wiegeabschnitte 20, 20, 20 befindet sich ein Aufnahmeabschnitt, der auch als Annahmevorrichtung 30 bezeichnet wird. Die Annahmevorrichtung30 dient dazu, von den Wiegeabschnitten 20 abgeworfenes Fasermaterial in Transportrichtung R zu einem Auslass 32 der Annahmevorrichtung 30 hinzutransportieren. Die Annahmevorrichtung 30 ist an der hier vorderen Seite mittels Abdeckungen 38 abgedeckt. Rechtsseitig der in Transportrichtung R letzten Abdeckung 38 befindet sich ein Mischöffner 40, der das von den Speisern 2, 10 gelieferte Fasermaterial gemischt und geöffnet dem Auslass 32 zuführt.

Ein Bedienterminal 31 ist vorgesehen, vorzugsweise den gesamten hier gezeigten Abschnitt der Anlage 1 zu bedienen. Er kann aber auch vorgesehen sein, beispielsweise nur den Mischöffner 40 zu betreiben.

Vorzugsweise haben alle Wiegeabschnitte 21 eine selbe Breite b.

Figur 1b zeigt einen Ausschnitt der Anlage 1 im Längsschnitt im Rahmen der Wiegeabschnitte 20, die unterhalb der in Figur 1a dargestellten Speiser 10 angeordnet sind. Jeder Wiegeabschnitt 20 weist in bekannter Weise einen Wiegebehälter 21 auf, in den Faserflocken 4a hineinfallen. Die Faserflocken 4a passieren im gezeigten Zustand einen Einlassabschnitt 23 des hier links angeordneten Wiegeabschnitt 20. Der Einlassabschnitt 23 ist beispielhaft mittels einer verschließbaren Öffnung in der Oberseite des jeweiligen Wiegebehälters 21 gebildet. Die Faserflocken 4a fallen dabei auf eine der Annahmevorrichtung 30 zugewandte, geschlossene und somit in Bezug auf den Wiegebehälter 21 unterseitig angeordnete, verschlossene Abwurföffnung eines Abwurfabschnitts 22. Damit bildet sich eine Schicht von Fasermaterial 4, gebildet mittels der Flocken 4a.

Ist der jeweilige Wiegebehälter 21 gefüllt, wird, wie beim rechten Wiegeabschnitt 20 dargestellt, diese Abwurföffnung des Wiegebehälters 21 geöffnet. Das Fasermaterial (hier mit dem Bezugszeichen 3 versehen) fällt in Richtung F auf einen exemplarisch als Transportband 33 ausgebildeten Transportabschnitt. Wie zu erkennen, befindet sich auf dem Transportband 33, und zwar auf dessen den Wiegeabschnitten 20, 20 zugewandten Trum 33a, bereits Fasermaterial 4, das vom linken Wiegeabschnitt 20 stammt. Dieses Trum 33a und damit das darauf befindliche Fasermaterial 4 wird in Transportrichtung R also nach rechts in Figur 1b bewegt und mittels einer zwischen den hier dargestellten zwei Wiegebehältern 21 angeordneten Walze 36 komprimiert. Dabei wird vorzugsweise zugleich Luft aus diesem Fasermaterial 4 herausgepresst.

Auf dieses Fasermaterial 4 fällt das im rechten Wiegebehälter 21 gesammelte Fasermaterial 3 schichtenartig herauf. Das so gebildete hier zweischichtige Fasermaterial 3, 4 durchläuft vorzugsweise eine weitere Walze 36, und wird dabei weiter komprimiert. Der Mischöffner 40 vermischt die beiden Fasermaterialien 3, 4 mittels Walzen 41 in bekannter Weise miteinander und öffnet diese zugleich mittels vorzugsweise der rechts angeordneten Öffnungswalze 42. Wie zudem zu erkennen, hat das in Richtung F herabfallende Fasermaterial zum vorher abgeworfenen Haufen Fasermaterial 3 einen bestimmten Abstand a. Der Abstand a setzt sich zusammen aus der Position dieses Haufens in Bezug auf den hier rechten Wiegebehälter 21, die Geschwindigkeit des Transportbands 33 und der Zeit, die das herabfallende Material 3 benötigt, um auf das Transportband 33 bzw. das darauf abgelegte Fasermaterial 4 zu gelangen. Diese Zeit wird auch als Abwurf- oder Ablieferzeit bezeichnet. Dabei begann der Abwurfvorgang vorzugsweise, als sich das linke Ende des Haufens etwa im Bereich des rechten Rands des rechten Wiegebehälters 21 befunden hatte. Der Verfahrweg für den Transportabschnitt pro Zyklus Z (später näher erläutert) setzt sich demnach aus der Breite b und dem jeweiligen Abstand zwischen zwei Wiegebehältern 21 bzw. dem Maximum der Summen der jeweiligen Breite aller Wiegebehälter 21, abgesehen vom in Transportrichtung R letzten Wiegebehälter 21, und dem Abstand zum in Transportrichtung T nächsten Wiegebehälter 21 sowie der Breite des letzten Wiegebehälters 21 zusammen.

Das so gebildete Faser-Mischmaterial wird in Form von Flocken über bzw. durch einen Schacht 37 hindurch in Richtung Auslass 32 transportiert. Das Mischmaterial wird somit wieder in Form von Flocken 5 den nachfolgenden Maschinen der Anlage 1 zugeführt.

Das Transportband 33 ist vorzugsweise umlaufend ausgebildet und läuft um zwei Umlenkrollen 35, 35 herum. An der den Wickelbehältern 21 abgewandten Seite ist das Transportband 33 vorzugsweise an frei rotierbar angeordneten Rollen 34 abgestützt, die zusätzlich die Funktion von Spannrollen übernehmen können. Alternativ oder zusätzlich kann auch zumindest eine der Umlenkrollen 35 als Spannrolle dienen. Der Antrieb des Transportbands 33 erfolgt mittels einer oder mehreren der Rollen 34, 35.

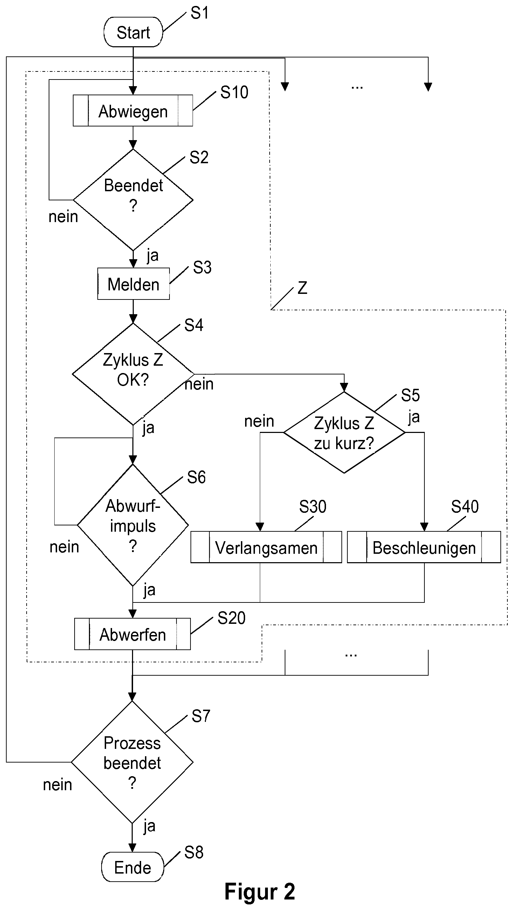

Figur 2 zeigt ein Verfahren für die in Figur 1 gezeigte Anlage 1. Nach einem Beginn in einem Schritt S1 wird für jede mit einem Wiegeabschnitt 20 versehene Vorrichtung 2, 10 ein Zyklus Z gestartet. Exemplarisch ist der Zyklus Z für eine Vorrichtung 2, 10 dargestellt und mittels einer umlaufenden Strichpunktlinie gekennzeichnet.

In einem ersten Schritt S10 wird das im jeweiligen Wiegebehälter 21 aufgenommene Fasermaterial gewogen. Dabei ist der vorstehend angegebene Einlassabschnitt 23 geöffnet.

Danach wird in einem Schritt S2 geprüft, ob der Abwiegeprozess beendet ist. Ist dies nicht der Fall (nein-Zweig nach Schritt S2), wird zu Schritt S10 zurückgesprungen. Anderenfalls (ja-Zweig nach Schritt S2) wird dieser Zustand in einem nachfolgenden Schritt S3 an eine vorzugsweise die Annahmevorrichtung 30 steuernde Einrichtung gemeldet.

Danach wird in einem Schritt S4 geprüft, ob der Zyklus OK ist, also ob die für den gesamten Zyklus Z vorgesehene Zeit (= Zykluszeit), verringert um die zum Abliefern des Fasermaterials beispielsweise auf das Transportband 33 notwendige Zeit, im Wesentlichen ausgeschöpft worden ist, um das Abwiegen komplett durchzuführen.

Ist dies der Fall (ja-Zweig nach Schritt S4), wird in einem nachfolgenden Schritt S6 geprüft, ob von der vorstehend angegebenen Steuerung ein Abwurfimpuls abgegeben worden ist. Der Abwurfimpuls wird erfindungsgemäß abgegeben, wenn alle Vorrichtungen 2, 10 im jeweiligen Schritt S3 das Ende des jeweiligen Abwiegeprozesses gemeldet haben. Es kann allerdings auch sein, dass nur ein Teil der Vorrichtungen 2, 10 diese Meldung abzugeben hat, da ein anderer Teil im aktuellen Zyklus Z kein Abwiegen durchführt oder nur teilweise durchzuführen hat. Wurde solch ein Abwurfimpuls abgegeben (ja-Zweig nach Schritt S6) wird in einem Schritt S20 ein Abwurfprozess durchgeführt. Andernfalls (nein-Zweig nach Schritt S6) wird zu Schritt S6 zurückgesprungen.

Ist der Zyklus Z nicht in Ordnung (nein-Zweig nach Schritt S4) wird in einem nachfolgenden Schritt S5 geprüft, ob der Zyklus Z zu kurz war, ob also die Zykluszeit zu gering war. Ist dies nicht der Fall (nein-Zweig nach Schritt S5) wird in einem nachfolgenden Schritt S30 ein Verlangsamungsvorgang durchgeführt. Andernfalls (ja-Zweig nach Schritt S5) wird vorzugsweise in Schritt S40 ein Beschleunigungsvorgang durchgeführt. Nach beiden Prozessen gemäß Schritten S30 und S40 wird jeweils entweder zu Schritt S20, wie hier gezeigt, oder zu Schritt S6 gesprungen.

Nach Beendigung des Abwurfvorgangs wird vorzugsweise in einem nachfolgenden Schritt S7 geprüft, ob der gesamte Prozess beendet ist, d. h. ob alle im Rahmen der Produktion vorgesehenen Zyklen Z durchlaufen wurden. Ist dies der Fall (ja-Zweig nach Schritt S7) ist das Verfahren in einem Schritt S8 beendet. Andernfalls (nein-Zweig nach Schritt S7) wird zu Schritt S10 zurückgesprungen.

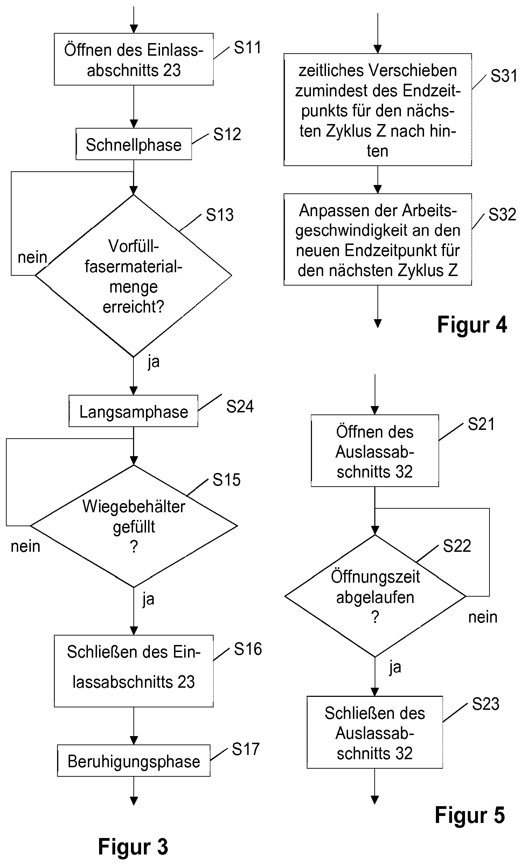

Figur 3 zeigt den Abwiegeprozess von Schritt S10 in größerem Detail. Dieser Prozess umfasst vorzugsweise als ersten Schritt S11 das Öffnen des Einlassabschnitts 23. Dadurch kann sich etwaig auf dem Wiegebehälter 21 befindliches Fasermaterial bereits in den jeweiligen Wiegebehälter 21 fallen. Daraufhin erfolgt in einem Schritt S12 eine sogenannte Schnellphase.

In dieser Phase wird der zugehörige Wiegebehälter 21 mit erhöhter Zuführgeschwindigkeit mit Fasermaterial gefüllt. Dies dient dem Zweck, den Wiegebehälter 21 in relativ kurzer Zeit mit einer bestimmten Menge Fasermaterial (= Vorfüllfasermaterialmenge) zu füllen. Dabei wird das eingefüllte Fasermaterial nur grob gewichtsmäßig erfasst. Dies bedeutet, dass die Vorfüllfasermaterialmenge geringer ist als die letztendlich für den jeweiligen Zyklus Z vorgesehene Gesamtmenge an Fasermaterial. In einem nachfolgenden Schritt S13 wird geprüft, ob die Vorfüllfasermaterialmenge erreicht ist oder nicht. Ist dies nicht der Fall (nein-Zweig nach Schritt S13, wird zu Schritt S13 zurückgesprungen.

Andernfalls (ja-Zweig nach Schritt S13) wird in einem nachfolgenden Schritt S14 auf eine Langsamphase umgeschaltet. In der Langsamphase wird der Wiegebehälter 21 mit geringerer Füllgeschwindigkeit mit weiterem Fasermaterial gefüllt. Dies ermöglicht, die aufgenommene Menge an Fasermaterial präziser erfassen zu können. Es wird mithin nunmehr das Gewicht der aufgenommenen Fasermaterialmenge genauer gemessen.

In einem nachfolgenden Schritt S15 wird geprüft, ob der Wiegebehälter 21 gefüllt ist, d. h. ob der Wiegebehälter 21 die für den Zyklus vorgesehene Fasermaterialmenge aufgenommen hat oder nicht. Ist dies nicht der Fall (nein-Zweig nach Schritt S15) wird zu Schritt S15 zurückgesprungen. Andernfalls (ja-Zweig nach Schritt S15) wird der Einlassabschnitt 23 in einem Schritt S16 geschlossen. Daraufhin oder zeitgleich erfolgt in einem Schritt S17 eine sogenannte Beruhigungsphase. In dieser Phase wird kein weiteres Fasermaterial mehr in den betreffenden Wiegebehälter 21 eingefüllt. Dadurch ist das Gewicht der im jeweiligen Wiegebehälter 21 aufgenommenen Fasermaterialmenge präzise erfassbar. Danach ist der Abwiegeprozess gemäß Schritt S10 beendet.

Figur 4 zeigt den Verlangsamungsvorgang gemäß Schritt S30 in größerem Detail. In einem ersten Schritt S31 werden zumindest der Endzeitpunkt für den nächsten Zyklus Z zeitlich nach hinten verschoben und damit die Zykluszeit vergrößert. Somit steht für den gesamten, nachfolgenden Zyklus Z mehr Zeit zur Verfügung. Ist der Abwiegeprozess gemäß Schritt S10 nach Figur 3 ausgebildet, kann zudem in Schritt S31 vorgesehen sein, anstelle der Schritte S13 bzw. S15 jeweils feste Zeiten vorzugeben und zumindest eine dieser Zeiten zu verlängern, sodass davon auszugehen ist, dass in der nunmehr neuen Zykluszeit die entsprechende Vorrichtung 2, 10 in der Lage ist, im nächsten Zyklus Z die Fasermaterialmenge rechtzeitig abgewogen zu haben.

In einem nachfolgenden Schritt S32 wird nun noch die Arbeitsgeschwindigkeit der jeweiligen Vorrichtung 2, 10 für den nächsten Zyklus Z an den neuen Endzeitpunkt und gegebenenfalls an den oder die verschobenen Umschaltzeitpunkt/e zwischen den Phasen angepasst. Die Anpassung kann bei einem Speiser 10 beispielsweise die Rotationsgeschwindigkeit von hier nicht weiter beschriebenen Materialtransportwalzen betreffen. Die Materialtransportwalzen drehen im nächsten Zyklus mit geringerer Geschwindigkeit, womit die mechanische Belastung sinkt und der Verschleiß verringert wird.

Figur 5 zeigt den Abwurfprozess gemäß Schritt S20 in größerem Detail. In einem ersten Schritt S21 wird der jeweilige Auslassabschnitts 32 geöffnet, sodass Fasermaterial gemäß Figur 1 auf den Transportabschnitt fallen kann. Danach wird in einem nachfolgenden Schritt S22 geprüft, ob die Öffnungszeit abgelaufen ist oder nicht. Ist dies nicht der Fall (nein-Zweig nach Schritt S22), wird zu Schritt S22 zurückgesprungen. Andernfalls (ja-Zweig nach Schritt S22) wird der Auslassabschnitt 32 in einem Schritt S23 geschlossen, und der Abwurfprozess ist beendet.

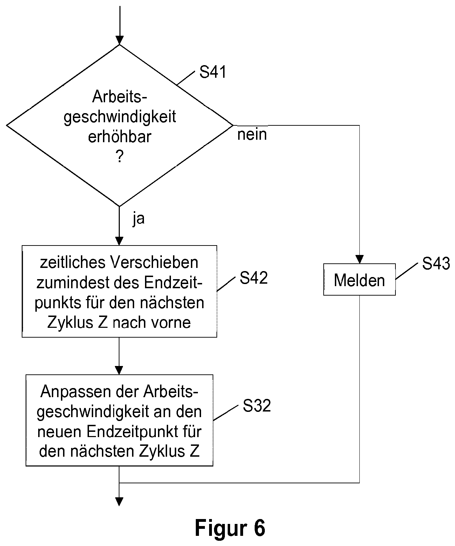

Figur 6 zeigt den Beschleunigungsvorgang gemäß Schritt S40 in größerem Detail. In einem ersten Schritt S41 wird geprüft, ob die Arbeitsgeschwindigkeit überhaupt erhöhbar ist. Diese Prüfung wird beispielsweise realisiert, indem geprüft wird, ob die jeweilige Vorrichtung 2, 10 bereits mit maximaler Arbeitsgeschwindigkeit arbeitet. Ist die Arbeitsgeschwindigkeit nicht erhöhbar (nein-Zweig nach Schritt S41), wird dies in einem nachfolgenden Schritt S43 der vorgenannten Steuereinrichtung gemeldet, und der Prozess ist beendet. Kann die Arbeitsgeschwindigkeit erhöht werden (ja-Zweig nach Schritt S41) wird analog zum Verlangsamungsvorgang mindestens der Endzeitpunkt für die Zykluszeit des nächsten Zyklus Z zeitlich nach vorne gelegt. Daraufhin wird wieder die Arbeitsgeschwindigkeit der Vorrichtung 2, 10 an den neuen Endzeitpunkt des nächsten Zyklus Z angepasst. Praktisch wird also Schritt S32 gemäß Figur 4 erneut durchgeführt. Danach ist der Beschleunigungsprozess gemäß Schritt S40 beendet.

Die Erfindung ist nicht auf die vorgenannte Ausführungsform beschränkt.

Im ja-Zweig vor Schritt S30 kann vorgesehen sein zu prüfen, ob die Zykluszeit ausreicht, den betreffenden Wiegebehälter 21 zu füllen, d. h. ob die Zykluszeit ausreicht, ohne Beachtung der Abwurfzeit das Abwiegen zu beenden. Alternativ oder zusätzlich kann die betreffende Vorrichtung 2, 10 an die Steuereinrichtung eine Restzeit übermitteln, die die betreffende Vorrichtung 2, 10 zum Befüllen des zugehörigen Wiegebehälters 21 und zum Abwerfen des Fasermaterials benötigt. In beiden Fällen kann die Steuereinrichtung die Geschwindigkeit des Transportabschnitts derart verringern und vorzugsweise vor Ablauf des Maximums der gemeldeten Restzeit(en) wieder auf die ursprüngliche Geschwindigkeit erhöhen, dass alle Vorrichtungen 2, 10 ihr Material gemäß den Produktionsvorgaben auf den Transportabschnitt abwerfen können.

Alternativ geben die Vorrichtungen 2, 10 zu einem bestimmten Zeitpunkt im aktuellen Zyklus Z, bevor der Transportabschnitt eine jeweilige Abwurfposition erreicht hat, vorzugsweise auf Basis von Erfahrungswerten ein Vorsignal ab, wenn sie das Befüllen des zugehörigen Wiegebehälters 21 gewährleisten können. Liegt eines der Vorsignale nicht vor, verlangsamt die Steuereinrichtung vorzugsweise den Transportabschnitt im Extremfall auf 0 bei Erreichen der letztgenannten Abwurfposition, wenn zumindest ein Vorsignal weiterhin fehlt.

Zudem kann vorgesehen sein, dass die Steuereinrichtung die Geschwindigkeit des Transportabschnitts auch für zumindest den nächsten Zyklus Z verringert, wenn eine der Vorrichtungen 2, 10 gemäß Schritt S43 eine Meldung abgegeben hat.

Schritt S30 kann dahingehend modifiziert sein, dass zunächst eine Meldung an die Steuereinrichtung abgeht, in der die Zeitdauer zum Abschließen des jeweiligen Abwiegeprozesses vorzugsweise plus Abwurfzeit enthalten ist. Die Steuereinrichtung kann daraufhin bei zuvor verringerter Transportgeschwindigkeit diese Geschwindigkeit für den nächsten Zyklus Z wieder entsprechend erhöhen. Zudem kann die Steuereinrichtung der meldenden Vorrichtung 2, 10 mitteilen, ob und, wenn ja, in welchem Maße sie ihre Arbeitsgeschwindigkeit für den nächsten Zyklus Z verringern soll. Oder aber die Steuereinrichtung übermittelt einfach die neue Zykluszeit, und die meldende Vorrichtung 2, 10 ermittelt die Arbeitsgeschwindigkeit für den nächsten Zyklus Z selbst.

Der Beschleunigungsprozess gemäß Schritt S40 kann entfallen. Dies führt dazu, dass Schritt S4 durch Schritt S5 ersetzt werden kann. Damit wird ein Entscheidungsschritt im Verfahren gemäß Figur 2 eingespart.

Zwischen den in Figur 3 gezeigten Phasen gemäß Schritten S12 und S13 kann beim Übergang zur Langsamphase eine Bremsphase vorgesehen sein. Während der Bremsphase wird die Arbeitsgeschwindigkeit der betreffenden Vorrichtung 2, 10 in einer Weise reduziert, die eine mechanische Belastung beispielsweise am Wiegebehälter 21 so gering wie möglich hält. Solche mechanischen Belastungen können Schwingungen sein, die vom Abbremsen der beispielhaft vorhandenen Materialtransportwalzen herrühren. Vorzugsweise wird das Abbremsen gemäß einer vorbestimmten Abbremskurve durchgeführt.

Weist das Verfahren die in Figur 3 gezeigten Phasen auf, kann beim Verlangsamungsprozess gemäß Schritt S30 vorgesehen sein, den Umschaltzeitpunkt zwischen Schnell- und Langsamphase zeitlich nach vorne zu verschieben. Dadurch verkürzt sich die Schnellphase, und die Langsamphase verlängert sich. Dies wirkt sich ebenfalls günstig auf die mechanische Belastung der betroffenen Vorrichtung 2, 10 aus. Ist zudem die vorstehend angegebene Bremsphase vorgesehen, kann diese zusätzlich oder alternativ zur Langsamphase verlängert werden, indem der oder die Umschaltzeitpunkte zwischen Schnell- und Bremsphase bzw. zwischen Brems- und Langsamphase für den nächsten Zyklus Z zeitlich verschoben werden.

Analog dazu kann beim Beschleunigungsprozess gemäß Schritt S40 vorgesehen sein, den Umschaltzeitpunkt zwischen Schnell- und Langsamphase zeitlich nach hinten zu verschieben. Dadurch verlängert sich die Schnellphase, und die Langsamphase verkürzt sich. Das Verkürzen ist insbesondere dann sinnvoll, wenn vorab die Langsamphase verlängert worden ist. Ist zudem die vorstehend angegebene Bremsphase vorgesehen, kann diese zusätzlich oder alternativ zur Langsamphase verkürzt werden, indem der oder die Umschaltzeitpunkte zwischen Schnell- und Bremsphase bzw. zwischen Brems- und Langsamphase im Zyklus Z zeitlich verschoben werden.

Das Erhöhen bzw. Verringern der Arbeitsgeschwindigkeit kann mittels vorgegebener Werte erfolgen. Alternativ ist vorgesehen zu ermitteln, welche Arbeitsgeschwindigkeit erforderlich ist, die Zykluszeit vollständig auszunutzen.

Neben der Berücksichtigung der mechanischen Belastung ist das Verfahren und somit jede damit betriebene Anlage 1 sehr faserschonend.

Im Ergebnis liefert die Erfindung ein wirkungsvolles Verfahren, gemäß dem sich eine Produktionsanlage bzw. -linie in der Spinnerei an gegebene und sich verändernde Bedingungen automatisch anpassen kann, wobei der nachteilige Stop-and-Go-Betrieb weitestgehend vermieden werden kann.

### Bezugszeichenliste

- 1: Flockenmischanlage
- 2: Kastenspeiser
- 3, 4: Fasermaterial
- 4a, 5: Flocke

- 10: Speiser
- 11: Einlass
- 12: Öffnungsabschnitt

- 20: Wiegeabschnitt
- 21: Wiegekasten
- 22: Abwurfabschnitt
- 23: Einlassabschnitt
- 24: Abdeckung

- 30: Annahmevorrichtung
- 31: Bedienpanel
- 32: Auslass
- 33: Transportband
- 33a: Trum
- 34: Stützrolle
- 35: Umlenkrolle
- 36: Walze
- 37: Schacht
- 38: Abdeckung

- 40: Mischöffner
- 41: Walze
- 42: Öffnungswalze

- a: Abstand
- b: Breite

- F: Fallrichtung
- R: Transportrichtung
- Z: Zyklus

- Si; i ε N: Schritt

## Patentansprüche

1. Verfahren
• zum Betreiben einer Speiseanlage (1) mit
- einer zu speisenden Annahmevorrichtung (30) sowie
- zumindest einer Speisevorrichtung (2, 10), gestaltet, zyklusartig Fasermaterial einer vorbestimmten Menge, auch zugehörige Fasermaterialmenge genannt,
· abzuwiegen und
· nach dem Abwiegen an die Annahmevorrichtung (30) abzuliefern, und
• aufweisend einen Zyklus (Z) mit
- einem ersten Schritt (S10) des Abwiegens der zugehörigen Fasermaterialmenge in der jeweiligen der zumindest einen Speisevorrichtung (2, 10), und
- wenn der erste Schritt (S10) abgeschlossen worden ist,
einem zweiten Schritt des Prüfens, ob jede jeweilige der zumindest einen Speisevorrichtung (2, 10) in der Lage ist, die zugehörige Fasermaterialmenge abgewogen und an die Annahmevorrichtung (30) abgeliefert zu haben, wenn die aktuelle Zykluszeit abgelaufen ist, und
- wenn der zweite Schritt ergibt, dass jede der zumindest einen Speisevorrichtung (2, 10) in der Lage ist, die zugehörige Fasermaterialmenge entsprechend abgewogen und abgeliefert zu haben,
einem dritten Schritt (S20) des Ablieferns der zugehörigen Fasermaterialmenge an die Annahmevorrichtung (30), und
- wenn der zweite Schritt ergibt, dass wenigstens eine der zumindest einen Speisevorrichtung (2, 10) nicht in der Lage ist, die zugehörige Fasermaterialmenge entsprechend abgewogen und abgeliefert zu haben,
einem vierten Schritt (S40) des Erhöhens einer Arbeitsgeschwindigkeit dieser wenigstens einen Speisevorrichtung (2, 10) um ein vorbestimmtes Maß, **dadurch gekennzeichnet, dass** der Schritt (S10) des Abwiegens der wenigstens einen Speisevorrichtung (2, 10) beinhaltet
• eine Schnellfüllphase (S12), umfassend zeitgleich
- ein Transportieren von Fasermaterial in einen Aufnahmebehälter (21 ) der jeweiligen Speisevorrichtung (2, 10) mit einer ersten Füllgeschwindigkeit sowie
- ein Wiegen des im Aufnahmebehälter (21 ) aufgenommenen Fasermaterials,
• bei Erreichen einer vorbestimmten Vorfüllfasermaterialmenge im Aufnahmebehälter, die geringer ist als die zugehörige Fasermaterialmenge, eine Langsamfüllphase (S24), umfassend ein weitergehendes Transportieren des Fasermaterials in den Aufnahmebehälter (21 ) mit einer zur ersten Füllgeschwindigkeit geringeren, zweiten Füllgeschwindigkeit und
• bei Erreichen der vorbestimmten Fasermaterialmenge, eine Beruhigungsphase in Bezug auf den Aufnahmebehälter (21).

2. Verfahren gemäß Anspruch 1, wobei der Schritt (S40) des Erhöhens der Arbeitsgeschwindigkeit ein Verkürzen der Zeit zum Abwiegen umfasst.

3. Verfahren gemäß einem der Ansprüche 1 oder 2, aufweisend eine Bremsphase, die
• die zwischen der Schnellfüllphase (S12) und Langsamfüllphase (S24) ausgeführt wird, und
• in der die Füllgeschwindigkeit von der ersten auf die zweite Füllgeschwindigkeit gemäß einem vorbestimmten Verlauf abgesenkt wird.

4. Verfahren gemäß Anspruch 2, wobei das Verkürzen der Zeit zum Abwiegen mittels Variierens der zeitlichen Dauer zumindest einer der Phasen des Abwiegens erfolgt.

5. Verfahren gemäß einem der vorhergehenden Ansprüche, ferner aufweisend einen sechsten Schritt (S43),
• ausgeführt, wenn
- der zweite Schritt ergibt, dass wenigstens eine der zumindest einen Speisevorrichtung (2, 10) nicht in der Lage ist, die zugehörige Fasermaterialmenge entsprechend abgewogen und abgeliefert zu haben, und
- die wenigstens eine Speisevorrichtung (2, 10) mit maximaler Arbeitsgeschwindigkeit arbeitet, und
• umfassend
- ein Signalisieren dieses Zustands der wenigstens einen Speisevorrichtung (2, 10) nach außen in Bezug auf die wenigstens eine Speisevorrichtung (2, 10) und/oder
- einen ersten Teilprozess, aufweisend
· ein Übermitteln (S43) einer notwendigen Restzeit zum Beenden des Abwiegens für die wenigstens eine Speisevorrichtung (2, 10) an eine die Annahmevorrichtung (30) steuernde Einrichtung (31) sowie
· ein Ändern der aktuellen Zykluszeit in der Annahmevorrichtung (30) auf Basis eines Maximums der übermittelten, wenigstens einen Restzeit.

6. Verfahren gemäß einem der vorhergehenden Ansprüche, wobei der Zyklus (Z) kontinuierlich wiederholt wird.

7. Speiseanlage (1), aufgebaut und gestaltet, gemäß einem Verfahren der vorhergehenden Ansprüche betrieben zu werden, wobei
• die Annahmevorrichtung (30) einen Transportabschnitt (33) umfasst, eingerichtet, aufgenommenes Fasermaterial in eine vorbestimmte Bewegungsrichtung (R) zu bewegen,
• die zumindest eine Speisevorrichtung (2, 10) gestaltet ist, Fasermaterial einer vorbestimmten Menge
- abzuwiegen und
- nach dem Abwiegen auf den Transportabschnitt (33) abzuwerfen bzw. darauf abzulegen,
• zumindest eine der zumindest einen Speisevorrichtung (2, 10),
- einen Waagebehälter (21) aufweist, der
∘ den jeweiligen Aufnahmebehälter (21) bildet,
∘ eine an einer dem Transportabschnitt (33) abgewandten Seite ausgebildeten Einfüllsperre aufweist, gestaltet,
◊ in einem Aktivierungszustand eine Einfüllöffnung (23) des Waagebehälters (21) zu verschließen, sodass Fasermaterial daran gehindert ist, in den Waagebehälter (21) zu gelangen, und
◊ in einem Deaktivierungszustand die Einfüllöffnung (23) zu öffnen,
∘ einen an einer dem Transportabschnitt (33) zugewandten Seite ausgebildeten Abwurfabschnitt aufweist, gestaltet,
◊ in einem Deaktivierungszustand eine Abwurföffnung (22) des Waagebehälters (21) zu verschließen, sodass im Waagebehälter (21) befindliches Fasermaterial daran hindert ist, aus dem Waagebehälter (21) herauszufallen, und
◊ in einem Aktivierungszustand die Abwurföffnung (22) des Waagebehälters (21) zu öffnen, und
∘ so in einem Abstand zum Transportabschnitt (33) angeordnet ist, dass sich im Waagebehälter befindliches Fasermaterial bei geöffneter Abwurföffnung (22) auf den Transportabschnitt (33) fällt, und
· eine Wägeeinrichtung (20) aufweist, gestaltet, das aktuelle Gewicht vom im Waagebehälter (21) aufgenommenem Fasermaterial zu ermitteln, und
• die Speiseanlage (1) eingerichtet ist,
- die Zeit für einen Zyklus (Z) zu ermitteln,
- auf Basis der ermittelten Zykluszeit sowie der aktuellen Bewegungsgeschwindigkeit des Transportabschnitts (33) und/oder des aktuellen Bremswegs des Transportabschnitts (33) zu ermitteln, ob die Speisevorrichtung (2, 10) in der Lage ist, die zugehörige Fasermaterialmenge abgewogen zu haben, wenn der Transportabschnitt (33) den vorbestimmten Abwurfweg (a) zurückgelegt hat.

8. Speiseanlage (1) gemäß Anspruch 7,
• aufweisend mehrere Speisevorrichtungen (2, 10), die in Bewegungsrichtung (R) des Transportabschnitts (33) hintereinander angeordnet sind,
• wobei jeweils zwei unmittelbar benachbarte Speisevorrichtungen (2, 10) zueinander einen Mindestabstand (a) zueinander haben, der dem Abwurfweg (a) hinsichtlich der in Transportrichtung (R) direkt vorgelagerten Speisevorrichtung (2, 10) entspricht.

## Claims

1. Method
• for operating a feeding system (1) with
- a receiving device (30) to be fed and
- at least one feeding device (2, 10), designed to weigh out, in cycles, a predetermined quantity of fibre material, also referred to as the associated quantity of fibre material,
· and
· to deliver it to the receiving device (30) after weighing, and
• comprising a cycle (Z) with
- a first step (S10) of weighing the associated quantity of fibre material in the respective one of the at least one feeding device (2, 10), and
- when the first step (S10) has been completed,
a second step of checking whether each respective one of the at least one feeding device (2, 10) is capable of having weighed and delivered the corresponding amount of fibre material to the receiving device (30) when the current cycle time has elapsed, and
- if the second step shows that each of the at least one feeding device (2, 10) is able to weigh and deliver the corresponding amount of fibre material accordingly,
a third step (S20) of delivering the corresponding amount of fibre material to the receiving device (30), and
- if the second step results in at least one of the at least one feeding device (2, 10) being unable to weigh and deliver the corresponding amount of fibre material accordingly,
a fourth step (S40) of increasing a working speed of this at least one feeding device (2, 10) by a predetermined amount,
- **characterised in that** the step (S10) of weighing the at least one feeding device (2, 10) includes
· a rapid filling phase (S12) comprising simultaneously
· transporting fibre material into a container (21) of the respective feeding device (2, 10) at a first filling speed, and
· weighing the fibre material received in the container (21),
· upon reaching a predetermined pre-fill fibre material quantity in the container that is less than the associated fibre material quantity, a slow filling phase (S24) comprising continuing to transport the fibre material into the container (21) at a second filling speed that is lower than the first filling speed, and upon reaching the predetermined amount of fibre material, a stabilisation phase with respect to the container (21).

2. Method according to claim1 , wherein the step (S40) of increasing the working speed comprises shortening the time for weighing.

3. Method according to one of claims 1 or 2, comprising a braking phase which
• which is performed between the fast filling phase (S12) and the slow filling phase (S24), and
• in which the filling speed is reduced from the first to the second filling speed according to a predetermined progression.

4. Method according to claim 2, wherein the shortening of the weighing time is achieved by varying the duration of at least one of the weighing phases.

5. Method according to one of the preceding claims, further comprising a sixth step (S43)
• performed when
- the second step results in at least one of the at least one feeding device (2, 10) being unable to have weighed and delivered the corresponding amount of fibre material, and
- the at least one feeding device (2, 10) is operating at maximum working speed, and
• comprising
- signalling this state of the at least one feeding device (2, 10) externally in relation to the at least one feeding device (2, 10) and/or
- a first sub-process comprising
· transmitting (S43) a necessary remaining time for completing the weighing for the at least one feeding device (2, 10) to a device (31) controlling the receiving device (30), and
· changing the current cycle time in the receiving device (30) based on a maximum of the transmitted at least one remaining time.

6. Method according to one of the preceding claims, wherein the cycle (Z) is repeated continuously.

7. Feeding system (1), constructed and designed to be operated according to a method of the preceding claims, wherein
• the receiving device (30) comprises a transport section (33) designed to move received fibre material in a predetermined direction of movement (R),
• the at least one feeding device (2, 10) is designed to weigh a predetermined amount of fibre material
- and
- after weighing, to drop or deposit it onto the transport section (33),
• at least one of the at least one feeding device (2, 10)
- has a weighing container (21) which
∘ forms the respective container (21),
∘ has a filling barrier formed on a side facing away from the transport section (33), designed
◊ in an activated state, to close a filling opening (23) of the weighing container (21) so that fibrous material is prevented from entering the weighing container (21), and
◊ in a deactivated state, opens the filling opening (23),
∘ has a discharge section formed on a side facing the transport section (33), designed
◊ in a deactivated state, closing a discharge opening (22) of the weighing container (21) so that fibre material located in the weighing container (21) is prevented from falling out of the weighing container (21), and
◊ in an activated state, to open the discharge opening (22) of the weighing container (21), and
∘ the arrangement is such that fibre material located in the weighing container falls onto the transport section (33) when the discharge opening (22) is open, and
· has a weighing device (20) designed to determine the current weight of the fibre material contained in the weighing container (21), and
• the feeding system (1) is designed
- to determine the time for a cycle (Z)
- on the basis of the determined cycle time and the current movement speed of the transport section (33) and/or the current braking distance of the transport section (33), to determine whether the feeding device (2, 10) is capable of weighing the corresponding amount of fibre material when the transport section (33) has travelled the predetermined drop path (a).

8. Feeding system (1) according to claim 7,
• comprising a plurality of feeding devices (2, 10) arranged one behind the other in the direction of movement (R) of the transport section (33),
• wherein each pair of immediately adjacent feeding devices (2, 10) has a minimum distance (a) between them, which corresponds to the drop path (a) with respect to the feeding device (2, 10) directly upstream in the transport direction (R).

## Revendications

1. Procédé
• pour exploiter une installation d'alimentation (1) avec
- un dispositif de réception (30) à alimenter ainsi que
- au moins un dispositif d'alimentation (2, 10) conçu pour
· peser de manière cyclique du matériau fibreux d'une quantité prédéterminée, également appelé quantité de matériau fibreux associée, et
· la fournir au dispositif de réception (30) après le pesage, et
• comportant un cycle (Z) avec
- une première étape (S10) de pesage de la quantité de matériau fibreux associée dans l'au moins un dispositif d'alimentation (2, 10) associé respectif, et
- lorsque la première étape (S10) a été terminée,
une seconde étape de vérification, si chacun de l'au moins un dispositif d'alimentation (2, 10) respectif est capable d'avoir pesé la quantité de matériau fibreux associée et de l'avoir fournie au dispositif de réception (30) lorsque le temps de cycle actuel est écoulé, et
- si la seconde étape montre que chacun de l'au moins un dispositif d'alimentation (2, 10) est capable d'avoir pesé et fourni la quantité de matériau fibreux associée en conséquence,
une troisième étape (S20) de fourniture de la quantité de matériau fibreux associée au dispositif de réception (30), et
- si la seconde étape montre qu'au moins un de l'au moins un dispositif d'alimentation (2, 10) n'est pas capable d'avoir pesé et fourni la quantité de matériau fibreux associée en conséquence, une quatrième étape (S40) d'augmentation d'une vitesse de travail de cet au moins un dispositif d'alimentation (2, 10) d'une valeur prédéterminée,
- **caractérisé en ce que** l'étape (S10) de pesage de l'au moins un dispositif d'alimentation (2, 10) comprend
· une phase de remplissage rapide (S12), comportant simultanément
· un transport de matériau fibreux dans un bac de réception (21) du dispositif d'alimentation (2, 10) respectif avec une première vitesse de remplissage ainsi que
· un pesage du matériau fibreux recueilli dans le bac de réception (21),
· lorsqu'une quantité de matériau fibreux de préremplissage prédéterminée dans le bac de réception est atteinte, qui est inférieure à la quantité de matériau fibreux associée, une phase de remplissage lent (S24) comportant un transport supplémentaire du matériau fibreux dans le bac de réception (21) avec une seconde vitesse de remplissage inférieure à la première vitesse de remplissage et
lorsque la quantité de matériau fibreux prédéterminée est atteinte, une phase de stabilisation par rapport au bac de réception (21).

2. Procédé selon la revendication 1, dans lequel l'étape (S40) d'augmentation de la vitesse de travail comporte une réduction du temps de pesage.

3. Procédé selon l'une des revendications 1 ou 2, comportant une phase de freinage qui
• est exécutée entre la phase de remplissage rapide (S12) et la phase de remplissage lent (S24), et
• pendant laquelle la vitesse de remplissage est abaissée de la première à la seconde vitesse de remplissage selon un déroulement prédéterminé.

4. Procédé selon la revendication 2, dans lequel la réduction du temps de pesage s'effectue au moyen d'une variation de la durée d'au moins une des phases du pesage.

5. Procédé selon l'une des revendications précédentes, comportant en outre une sixième étape (S43),
• exécutée si
- la seconde étape montre qu'au moins un de l'au moins un dispositif d'alimentation (2, 10) n'est pas capable d'avoir pesé et fourni la quantité de matériau fibreux associée en conséquence, et
- que l'au moins un dispositif d'alimentation (2, 10) fonctionne à vitesse de travail maximale, et
• comportant
- une signalisation de cet état de l'au moins un dispositif d'alimentation (2, 10) vers l'extérieur par rapport à l'au moins un dispositif d'alimentation (2, 10) et/ou
- un premier sous-processus, comportant
· une transmission (S43) d'un temps restant nécessaire pour terminer le pesage pour l'au moins un dispositif d'alimentation (2, 10) à un dispositif de commande (31) du dispositif de réception (30), ainsi que
· une modification du temps de cycle actuel dans le dispositif de réception (30) sur la base d'un maximum de l'au moins un temps restant transmis.

6. Procédé selon l'une des revendications précédentes, dans lequel le cycle (Z) est répété en continu.

7. Installation d'alimentation (1), construite et conçue pour être exploitée selon un procédé des revendications précédentes, dans laquelle
• le dispositif de réception (30) comporte une section de transport (33) paramétrée pour déplacer du matériau fibreux réceptionné dans un sens du mouvement (R) prédéterminé,
• l'au moins un dispositif d'alimentation (2, 10) est conçu pour
- peser du matériau fibreux d'une quantité prédéterminée et
- le rejeter ou le déposer après le pesage sur la section de transport (33),
• au moins un de l'au moins un dispositif d'alimentation (2, 10),
- comporte un bac de pesée (21), qui
∘ forme le bac de réception (21) respectif,
∘ comporte un dispositif de blocage de remplissage formé sur un côté opposé à la section de transport (33), conçu
◊ pour fermer une ouverture de remplissage (23) du bac de pesée (21) dans un état d'activation, de manière à empêcher du matériau fibreux à parvenir dans le bac de pesée (21), et
◊ pour ouvrir l'ouverture de remplissage (23) dans un état de désactivation,
∘ comporte une section de déchargement formée sur un côté faisant face à la section de transport (33), conçue
◊ pour fermer une ouverture de déchargement (22) du bac de pesée (21) dans un état de désactivation, de manière à empêcher du matériau fibreux se trouvant dans le bac de pesée (21) de tomber du bac de pesée (21), et
◊ pour ouvrir l'ouverture de déchargement (22) du bac de pesée (21) dans un état d'activation, et
∘ est disposé de telle manière à une distance de la section de transport (33) que le matériau fibreux qui se trouve dans le bac de pesée tombe sur la section de transport (33) lorsque l'ouverture de déchargement (22) est ouverte, et
· comporte un dispositif de pesage (20), conçu pour déterminer le poids actuel du matériau fibreux recueilli dans le bac de pesée (21), et
• l'installation d'alimentation (1) est paramétrée
- pour déterminer la durée pour un cycle (Z),
- pour déterminer, sur la base du temps de cycle déterminé et de la vitesse de déplacement actuelle de la section de transport (33) et/ou de la distance de freinage actuelle de la section de transport (33), si le dispositif d'alimentation (2, 10) est capable d'avoir pesé la quantité de matériau fibreux associée quand la section de transport (33) aura parcouru le chemin de déchargement (a) prédéterminé.

8. Installation d'alimentation (1) selon la revendication 7,
• comportant plusieurs dispositifs d'alimentation (2, 10) qui sont disposés l'un derrière l'autre dans le sens du mouvement (R) de la section de transport (33),
• dans laquelle deux dispositifs d'alimentation (2, 10) immédiatement adjacents ont entre eux une distance minimale (a) l'un par rapport à l'autre qui correspond au chemin de déchargement (a) par rapport au dispositif d'alimentation (2, 10) directement en amont dans le sens du transport (R).
